# FASCICULE DE BREVET EUROPEEN

(11) **EP 1 692 032 B1**
(45) Date de publication et mention de la délivrance du brevet: **26.11.2008**
(21) Numéro de dépôt: 04805840.8
(22) Date de dépôt: 18.11.2004
(51) Int. Cl.: B62D 7/20, B62D 7/16, B62D 7/14

(54) **ESSIEU POUR VEHICULE AUTOMOBILE MUNI D UN DISPOSITIF DE MAIN TIEN DE SURETE D UN BRAS DE COMMANDE D UN TEL ESSIEU, ET ENSEMBLE DE COMMANDE ASSOCIE**
ACHSE FÜR KRAFTFAHRZEUG MIT EINER SICHERHEITSVORRICHTUNG FÜR EINEN ARM, DER ZUR STEUERUNG EINER SOLCHEN ACHSE VERWENDET WIRD, UND ZUGEHÖRIGE STEUERANORDNUNG
AXLE FOR MOTOR VEHICLE COMPRISING A SAFETY DEVICE FOR AN ARM THAT IS USED TO CONTROL ONE SUCH AXLE, AND ASSOCIATED CONTROL ASSEMBLY

(30) Priorité: 02.12.2003 FR 0314138
(43) Date de publication de la demande: 23.08.2006
(73) Titulaire: RENAULT S.A.S., 92100 Boulogne Billancourt (FR)
(72) Inventeur: BOUKHARI, Samir, F-78280 Guyancourt (FR); PUPIN, Julie, F-92600 Asnieres (FR); SALLAT, René, F-78490 Boissy Sans Avoir (FR)
(86) Numéro de dépôt international: PCT/FR2004/050597
(87) Numéro de publication internationale: WO 2005/056368

(56) Documents cités:
- EP-A- 0 079 088
- EP-A- 0 647 554
- WO-A-03/068582
- DE-A- 10 019 563
- US-A- 3 212 793
- US-A- 3 393 922
- US-A- 4 336 953

## Description

La présente invention concerne un essieu pour véhicule automobile à au moins quatre roues directrices, et comprenant un actionneur permettant la commande d'un tel essieu.

Un essieu de véhicule automobile comporte généralement deux bras oscillants longitudinaux portant chacun une roue à une de leur extrémité, et sont articulés à leur autre extrémité sur la carrosserie du véhicule. Des moyens élastiques et amortisseurs sont disposés entre les bras et la carrosserie, et dans le cas d'un essieu souple, une barre transversale anti-dévers élastiquement déformable en torsion est rigidement reliée par ses extrémités aux deux bras oscillants.

Dans les virages, les roues d'un véhicule automobile subissent des efforts latéraux dans la direction du virage. Afin d'améliorer l'équilibre du véhicule et contrôler de façon active son comportement en lacets, un dispositif commandant une rotation limitée des roues arrières est installé. On parle alors de système quatre roues directrices.

On connaît par les demandes de brevet EP-A-0 890 499 et US 5 086 861, des dispositifs permettant l'orientation des roues arrières d'un véhicule automobile par un essieu comprenant deux bras, reliés chacun à une extrémité à une roue arrière, et à un actionneur apte à déplacer les bras pour orienter les roues arrières.

On connaît aussi la demande de brevet DE 100 19 563 qui montre le préambule de la revendication 1 et qui décrit un essieu de véhicule automobile comprenant deux bielles reliées à des supports de roues pouvant pivoter angulairement autour d'un axe vertical, un levier de direction articulé sur les bielles, et un actionneur apte à commander le levier de direction par l'intermédiaire d'un bras de déplacement fixé sur ledit levier.

Cependant, de tels dispositifs possèdent l'inconvénient, outre un encombrement important, de présenter des risques en cas de défaillance de l'actionneur, pouvant entraîner une instabilité du véhicule automobile

On connaît également la demande de brevet WO 03/068582 qui décrit un dispositif de braquage des roues d'un véhicule automobile comprenant en outre des éléments de rappel du bras de commande de braquage des roue dans une position prédéterminée correspondant à angle de braquage de roues nul et un moyen de retenue pour maintenir le bras dans la position prédéterminée en cas de défaillance du dispositif de braquage.

Cependant, un tel dispositif possède l'inconvénient, de nécessiter le retour du bras dans la position déterminée grâce aux éléments de rappel avant de bloquer ledit bras, limitant l'efficacité de ce système de sécurité en cas de défaillance du dispositif de braquage.

La présente invention a donc pour objet de résoudre ces inconvénients en proposant un essieu comprenant des moyens de sécurisation en cas de défaillance d'un dispositif d'orientation des roues.

A cet effet, l'essieu selon l'invention destiné à un véhicule automobile à au moins quatre roues directrices comprend au moins deux bras oscillants portant des supports de roues aptes à pivoter selon un axe sensiblement vertical par rapport auxdits bras pour orienter les roues et une tringlerie de commande d'orientation des roues reliées aux supports de roues. La tringlerie de commande d'orientation des roues est commandée par un actionneur comprenant un bras de déplacement qui est mobile suivant son axe sur lequel est monté un dispositif de maintien de sûreté, indépendant de l'actionneur et apte à maintenir instantanément le bras de déplacement dans une position donnée, en cas de défaillance de l'actionneur, quelque soit la position dudit bras.

La sécurité est accrue pour les utilisateurs de véhicule automobile comprenant un tel essieu, grâce au dispositif de maintien de sûreté, le bras de commande d'orientation des roues ne peut provoquer une rotation intempestive des roues en cas de défaillance de l'actionneur.

Cet essieu a également l'avantage de comprendre un dispositif de maintien de sûreté coaxial avec le bras de déplacement de l'actionneur. Le dispositif de maintien de sûreté n'engendre donc pas d'efforts parasites d'inertie sur l'essieu et possède un encombrement réduit.

Un tel essieu comprenant un dispositif de maintien de sûreté présente l'avantage d'engendrer des coûts de fabrication réduits et de nécessiter une zone d'encombrement retreinte. En effet, le volume d'implantation du dispositif de maintien de sûreté est faible et ne nécessite pas d'avoir un logement spécifique. 11 est ainsi possible de prévoir un logement pour d'autres éléments du véhicule automobile à proximité de cet essieu, par exemple une roue de secours, dans le cas d'un essieu arrière.

Le dispositif de maintien de sûreté étant distinct et séparé de l'actionneur commandant le bras de déplacement, il n'est pas nécessaire d'avoir un actionneur de structure particulière pour commander l'essieu, ou encore de démonter l'actionneur en cas de maintenance à effectuer au niveau du dispositif de maintien de sûreté.

Dans un mode de réalisation, le dispositif de maintien de sûreté comprend des moyens de blocage du bras de déplacement dans une position déterminée. Les moyens de blocage peuvent avantageusement comprendre un carter fixe entourant le bras de déplacement comprenant un alésage muni d'une section tronconique, et au moins un ensemble de serrage disposé sur le bras de déplacement. L'ensemble de serrage comprend des mors sollicités axialement contre la surface de section tronconique par un organe élastique pour provoquer leur rapprochement radial, et le serrage du bras de déplacement. Les moyens de blocage comprennent des doigts de déclenchement mobiles entre une position de retenue axiale du mors et une position déverrouillée, les doigts étant par exemple actionnés par un relais et un électroaimant.

L'invention sera mieux comprise à l'étude de la description détaillée de quelques modes de réalisation nullement limitatifs et illustrés par les dessins annexés sur lesquels :
- la figure 1 est une vue en perspective d'un essieu;
- la figure 2 est une vue d'un dispositif de maintien de sûreté selon un premier mode de réalisation;
- la figure 3 est une coupe dé la figure 2 selon l'axe de coupe III-III de la figure 2;
- la figure 4 est une vue d'un dispositif de maintien de sûreté selon un deuxième mode de réalisation ne faisant pas partie de l'invention, et
- la figure 5 est une vue d'un dispositif de maintien de sûreté selon un troisième mode de réalisation ne faisant pas partie de l'invention.

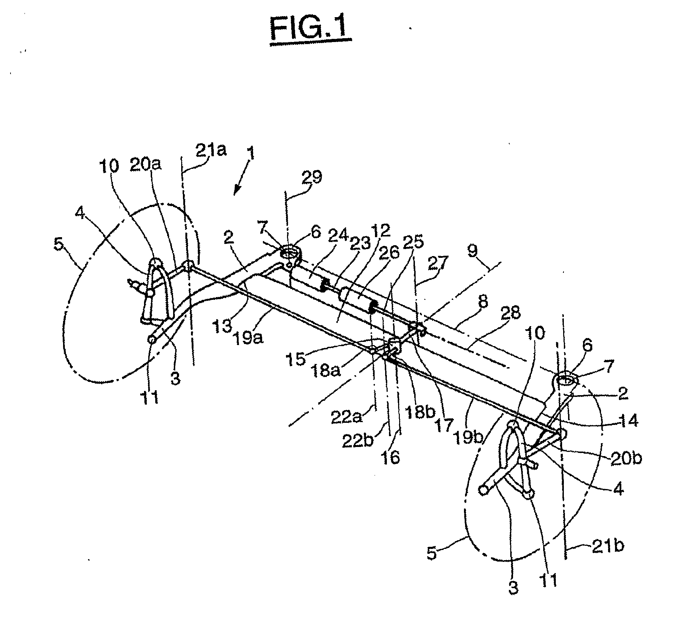

A titre d'exemple, un essieu souple a été représente sur la figure 1. I1 sera compris que tout type d'essieu peut convenir à la présente invention. Un essieu souple 1 comprend deux bras oscillants longitudinaux 2. Chaque bras oscillant 2 est relié par une extrémité 3, dirigée vers l'arrière du véhicule à un support de roues 4. Les roues sont symbolisées par des ellipses 5. L'autre extrémité 6 des bras oscillants 2, dirigée vers l'avant du véhicule, est articulée à la carrosserie du véhicule (non représentée) au niveau d'un alésage 7. Les deux bras oscillants 2 sont articulés sur la carrosserie autour d'un même axe de rotation 8, transversal par rapport à l'axe longitudinal médian 9 du véhicule. Chaque support de roue 4 est relié aux bras oscillants 2 par deux articulations 10 et 11, de façon connue par exemple avec des rotules. Une traverse 12, élastiquement déformable en torsion, est rigidement reliée par ses extrémités 13 et 14 aux deux bras oscillants 2, sensiblement parallèlement et à proximité de l'axe de rotation 8. La traverse 12 peut présenter un profil en forme de V couché, dont l'ouverture est dirigée vers l'avant du véhicule. Bien entendu des traverses de forme différentes peuvent être utilisées. Un palonnier 15 est relié sensiblement au milieu de la traverse 12, par un axe d'articulation 16 sensiblement vertical. Le palonnier 15 s'étendant transversalement à la traverse 12, comporte une extrémité 17 dirigée vers l'avant du véhicule, et deux extrémités 18a et 18b dirigées vers l'arrière du véhicule. Les extrémités 18a et 18b du palonnier sont reliées à chaque support de roue 4 par deux bielles 19a et 19b sensiblement parallèles à la traverse 12 par l'intermédiaire de deux bras 20a et 20b, s'étendant vers l'avant du véhicule de façon sensiblement horizontal. L'extrémité de la bielle 19a, respectivement 19b, est alors articulée à l'extrémité libre du bras 20a, respectivement 20b, autour d'un axe 21a, respectivement 21b, sensiblement vertical, tandis que l'autre extrémité est articulée à l'extrémité 18a, respectivement 18b, du pionnier autour d'un axe 22a, respectivement 22b, sensiblement vertical. Le palonnier 15 peut présenter par exemple une forme de fourchette, dont l'extrémité du manche forme l'extrémité avant 17, et l'extrémité des dents forme les extrémités arrières 18a et 18b. L'axe de rotation 16 du palonnier 15 est fixé sur les deux dents de la fourchette. Bien entendu d'autres formes peuvent être envisagées. L'extrémité avant 17 du palonnier est reliée, par l'intermédiaire d'un bras de déplacement 23 d'un actionneur 24, au bras oscillant gauche 2. L'extrémité du bras de déplacement 23 est articulée à l'extrémité avant 17 du palonnier autour d'un axe 29 sensiblement vertical. Un arbre de liaison 25 d'un dispositif de maintien de sûreté est positionné de telle sorte que l'axe 28 de l'arbre de liaison 25, coaxial avec le bras de déplacement 23, soit sensiblement parallèle à la traverse 12. Selon différentes variantes, il est également envisageable de relier le bras de déplacement 23 à l'extrémité avant 17 du palonnier 15 et de monter directement le dispositif de maintien de sûreté 26 sur ledit bras de déplacement 23. Il est également envisageable de positionner le dispositif de maintien de sûreté 26 et l'actionneur 24 de part et d'autre du palonnier 15 (non représenté), le dispositif de maintien de sûreté 26 étant relié au bras oscillant droit 2 et l'axe 28 restant coaxial au bras de déplacement 23.

L'actionneur 24 est décentré par rapport à l'axe longitudinal médian 9 du véhicule automobile, il est articulé à l'extrémité avant 6 du bras oscillant gauche autour d'un axe sensiblement vertical 29, passant par l'axe du bras de déplacement 27. L'actionneur 24 peut également être fixé à différents endroits de la carrosserie du véhicule. L'actionneur 24 peut être avantageusement positionné de façon à ce que son axe est confondu avec l'axe de rotation 8 du train. Etant donné que le dispositif de maintien de sûreté 26 est coaxial avec l'actionneur 24, ces deux éléments sont neutres lorsque l'essieu débat, il n'induit pas des efforts parasites d'inertie.

Le fonctionnement de l'essieu 1 est le suivant, l'actionneur 24 commande la translation du bras de déplacement 23 qui provoque la rotation du palonnier 15 autour de son axe 16 dans le sens horaire. Cette rotation déplace l'extrémité arrière 18 du palonnier vers la gauche du véhicule, ce qui provoque la rotation des supports de roues 4, autour d'un axe sensiblement vertical, vers la gauche par l'intermédiaire des bielles 19. Une translation du bras de déplacement 23 dans le sens inverse fait tourner le palonnier 15 dans le sens inverse provoquant la rotation des roues vers la droite. Le dispositif de maintien de sûreté 25 peut bloquer la translation du bras de déplacement 23 dans une position déterminée en cas de défaillance de l'actionneur 24.

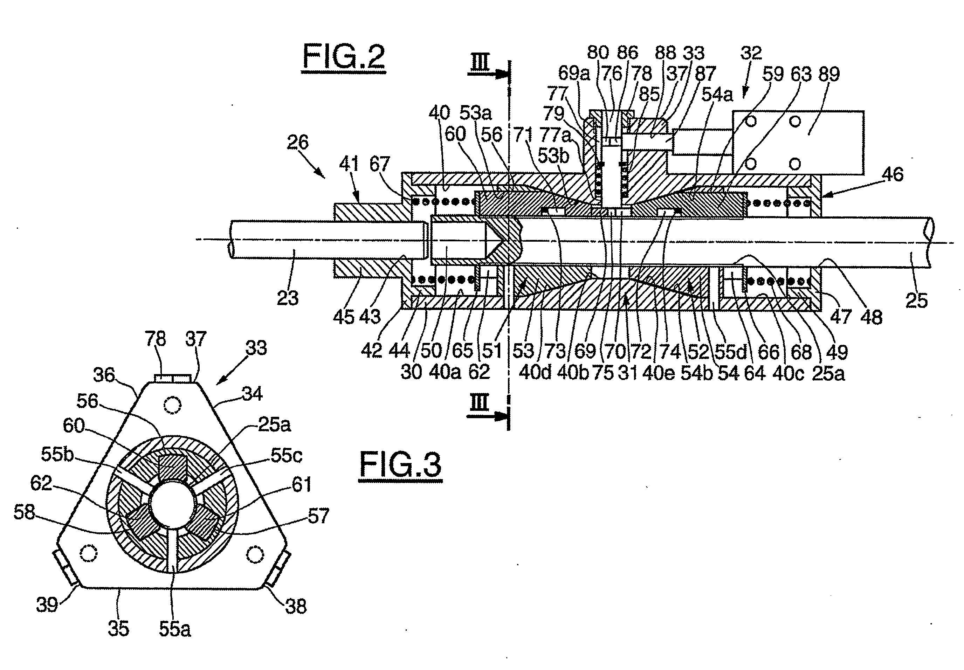

Sur la figure 2, un dispositif de maintien de sûreté, référencé 26 dans son ensemble comprend un carter 30, un arbre de liaison 25, des moyens de blocage 31 de l'arbre de liaison et un moyen de déclenchement 32 des moyens de blocage 31.

Le carter 30 tubulaire comprend une saillie 33 radiale extérieure située axialement au milieu du carter 30 tubulaire, présentant en vue de côté une forme générale triangulaire, dont les surfaces 34 à 36 (figures 3), formant les côtés de la saillie 33, sont reliés entre elles par des surfaces planes 37 à 39 (figure 3). Le carter 30 tubulaire comprend un alésage 40 étagé comprenant un rétrécissement de section dans sa partie médiane et présentant deux étages latéraux de même diamètre 40a et 40c, et un étage central de diamètre inférieur 40b reliés aux deux étages latéraux 40a et 40c par des surfaces tronconiques 40d et 40e s'évasant en direction desdits étages latéraux 40a et 40c.

Le carter 30 est fermé, à ses extrémités libres par un couvercle 41, 46, comprenant une partie radiale 42, 47, munie d'un trou central 43, 48, une partie tubulaire 44, 49, s'étendant axialement d'un côté de la partie radiale 42, 47, et une autre partie tubulaire 45 de plus faible diamètre s'étendant axialement de l'autre côté de la partie radiale 42. La partie radiale 42, 47, est adaptée pour venir en appui contre l'extrémité du carter 30. La partie tubulaire 44, 49 est prévue pour être ajustée dans l'étage latéral 40a, 40c, de l'alésage 40 du carter 30.

Dans la variante de réalisation où le dispositif de maintien de sûreté 26 et l'actionneur 24 sont du même côté que le palonnier 15, l'arbre de liaison 25 comprend à une de ses extrémités un alésage 50 apte à recevoir le bras de déplacement 23, de façon à réaliser une liaison rigide, et est relié à l'extrémité, à l'extrémité avant 17 du palonnier 15 (figure 1). L'ensemble constitué du bras de déplacement 23 et de l'arbre de liaison traverse le carter 30 de part en part. La partie tubulaire 45 du couvercle 41 est prévue pour permettre le guidage et la translation du bras de déplacement 23 et de l'arbre de liaison 25. Il est également possible de disposer au niveau des couvercles 41 et 46 des paliers glissants pour guider la translation de l'arbre de liaison 25 et du bras de déplacement 23.

L'arbre de liaison 25, coaxial avec le bras de déplacement 23, comprend une portion filetée 25a dans sa partie médiane qui coopère avec deux ensembles de serrage 51 et 52 des moyens de blocage 31. Les ensembles de serrage 51 et 52 sont identiques et disposés dans le carter 30 axialement de part et d'autre du rétrécissement central. L'ensemble de serrage 51, 52, est disposé contre la surface tronconique 40d, 40e, de l'alésage 40, et comprend un guide de positionnement 53, 54, monté de façon solidaire avec le carter 30 à une de ses extrémités, au niveau d'alésages 55a à 55c alignés radialement et disposés angulairement à 120 degrés (figure 3), 55d, permettant le passage d'organes de fixations (non représentés). Le guide de positionnement 53, 54, annulaire comprend une surface extérieure muni d'une portion cylindrique 53a, 54a, et d'une portion tronconique 53b, 54b, en correspondance de forme avec la surface tronconique 40d, 40e, du carter 30, et des encoches axiales 56 à 58 (figure 3), 59, aménagées dans un alésage du guide, s'étendant axialement sur toute la longueur du guide de positionnement 53, 54, et décalées angulairement à 120 degrés.

Des mors 60 à 62 (figure 3), 63 et 64, son disposés mobiles axialement dans les encoches 56 à 58, 59, et présentent à une extrémité des surfaces extérieures inclinées, destinées à venir en contact et coopérer avec la surface tronconique 40d, 40e de l'alésage 40, et prolongées par des saillies axiales 69, 70, en saillie dans l'espace central, de plus petits diamètres extérieurs que le diamètre de l'alésage 40b. Les mors 60 à 62, 63 et 64 comprennent à l'extrémité opposée un flasque 65, 66.

Les mors 60 à 62, 63 et 64, présentent des surfaces intérieures qui sont des portions de surfaces filetées (non représentées) apte à coopérer avec le filetage 25a de l'arbre de liaison 25.

Les mors 60 à 62, 63 et 64 comprennent sur leurs surfaces intérieures des rainures 71, 72, alignées radialement et formant un passage annulaire dans lequel est disposé un anneau élastique radialement 73, 74, de diamètre supérieur à celui de l'arbre de liaison 25 et venant en contact avec les mors 60 à 62, 63 et 64. Les anneaux élastiques 73 et 74 présentent à l'état libre un diamètre supérieur à celui du passage défini dans les mors de sorte qu'une fois insérée, il écarte radialement les mors 60 à 62, 63 et 64, de l'arbre de liaison 25.

Un organe élastique 67, 68, prend appui à une de ses extrémités sur le flasque 65, 66, et vient en contact à l'autre extrémité sur la portion radiale 42, 47, du couvercle 41, 46.

Le moyen de déclenchement 32 comprend trois doigts de déclenchement 76 disposés à 120 degrés. Le doigt de déclenchement 76, de forme cylindrique, et mobile suivant son axe, est disposé radialement et comprend dans sa partie médiane un épaulement 79 et un alésage transversal 80 dans sa partie radialement extérieure. Le doigt de déclenchement 76 est positionné dans un alésage radial 77 disposé à l'intérieur de la saillie 33 du carter 30 et comprend à son extrémité radialement extérieure un filet 69a coopérant avec un écrou 78. L'alésage 77 comprend à son extrémité radialement intérieure une nervure 77a. Un organe élastique 85 vient en appui contre la partie radialement supérieure de la nervure 77a et contre l'épaulement 79 du doigt de déclenchement 76. Le guidage radial du doigt de déclenchement 76 est réalisé par l'intermédiaire de la nervure 77a et de l'alésage interne de l'écrou 78.

Le doigt de déclenchement 76 comprend dans sa partie radiale intérieur une saillie 75 venant en appui axial contre les saillies 69 et 70.

Un doigt mobile 87 du moyen de déclenchement 32, sensiblement parallèle à l'arbre de liaison 25 et passant à travers un alésage 88 est actionné par un relais et un électroaimant (non représentés) à l'intérieur d'un carter 89 fixé sur le carter 30. Le doigt mobile contre à son extrémité une saillie 86 positionné à l'intérieur de l'alésage transversal 80.

Le fonctionnement du dispositif de maintien de sûreté 26 est le suivant. Lors d'une défaillance de l'actionneur 24, le relais et l'électroaimant provoquent le retrait des doigts mobiles 76 en direction du relais et de l'électroaimant. Cette translation libère les doigts de déclenchement 76 qui sont déplacés suivant leur axe par les organes élastiques 85. Les saillies 75 des doigts de déclenchement 76 libèrent ainsi les mors 60 à 62, 63 et 64. Les mors 60 à 62, 63 et 64 sont sollicités axialement en appui par leur surfaces inclinées contre les surfaces tronconiques 40d, 40e, du carter 30, et se resserrent radialement, et viennent serrer sur l'arbre de liaison 25, provoquant ainsi par l'intermédiaire de leur filetage un blocage en translation.

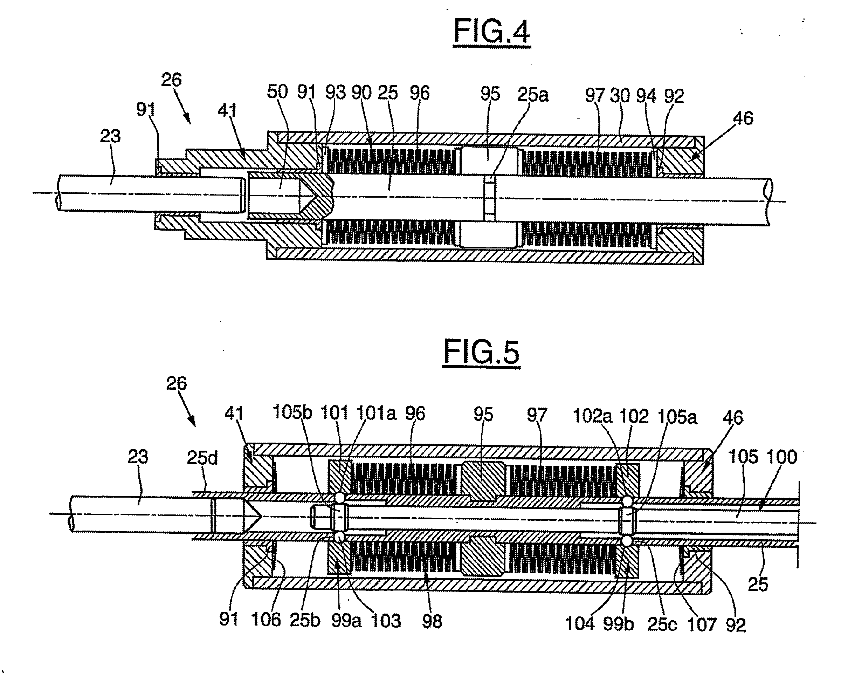

Sur la figure 4, les références aux éléments semblables à ceux de la figure 2 ont été conservées. Le dispositif de maintien de sûreté, référencé 26 dans son ensemble, comprend un arbre de liaison 25, un carter 30 tubulaire et un moyen de rappel 90 de l'arbre de liaison 25 dans une position donnée.

Un palier glissant 91, 92, est monté dans le couvercle 41, 46, pour guider en translation l'arbre de liaison 25. Une pièce d'appui 93, 94, est fixée rigidement sur l'intérieur du couvercle 41, 46.

Le moyen de rappel 90 comprend une pièce de butée 95, montée solidairement avec l'arbre de liaison 25 au niveau d'une gorge annulaire 25a et deux organes élastiques 96 et 97. Les organes élastiques 96 et 97, par exemple des rondelles Bellevilles, sont situés axialement de part et d'autre de la pièce de butée 95, entre la pièce de butée 95 et les pièces d'appui 93 et 94. Les organes élastiques 96, et 97 sont montés de façon qu'en position d'équilibre, l'arbre de liaison 25, commandant l'orientation des roues, soit dans une position correspondant à un angle de braquage nul. L'actionneur 24 (figure 1) est dimensionné de façon à pouvoir permettre le déplacement du bras de déplacement 23 et de l'arbre de liaison 25 à l'encontre de l'organe élastique 96 ou de l'organe élastique 97 afin de pouvoir assurer la rotation des roues arrières.

Le fonctionnement du dispositif de maintien 26 est le suivant. Le bras de déplacement 23 de l'actionneur, permettant la rotation des roues arrières du véhicule automobile, entraîne en translation l'arbre de liaison 25 et la pièce de butée 95 provoquant la compression de l'organe élastique 96 ou 97. Une translation du bras de déplacement 23 dans le sens inverse comprime l'autre organe élastique 96 ou 97. En cas de défaillance de l'actionneur 24 (figure 1), les organes élastiques 96 et 97 ramènent par défaut l'arbre de liaison 25 et le bras de déplacement 23 dans une position neutre correspondant à un angle de braquage des roues nul et appliquent un effort qui réduit une translation involontaire de l'arbre de liaison 25 et du bras de déplacement 23, ce qui permet de maintenir un rayon de braquage sensiblement nul.

Dans la variante de réalisation illustrée sur la figure 5, les éléments identiques à la figure précédente portent les mêmes références. Le moyen de rappel 98 de l'arbre de liaison 25 comprend deux moyens de retenue 99a et 99b, coopérant avec un moyen de déclenchement 100. Le moyen de rappel 98 comprend deux organes élastiques 96 et 97, par exemple des rondelles Belleville. Les organes élastiques 96 et 97 sont situés axialement de part et d'autre de la pièce de butée 95. L'organe élastique 96, 97, vient en appui à une extrémité sur la pièce de butée 95 et à l'autre extrémité sur une pièce mobile 101, 102, disposée sur l'arbre de liaison 25 et de forme annulaire. Le moyen de retenue 99a, 99b, comprend la pièce mobile 101, 102, comprenant un évidement annulaire 101a, 102a de section en arc de cercle. La pièce mobile 101, 102, est maintenue fixe axialement sur l'arbre de liaison 25 par une rangée de billes 103, 104, logées dans un passage radial 25b, 25c, ménagé dans l'arbre de liaison 25 et en saillie dans l'évidement 101a, 102a, de la pièce mobile 101, 102.

L'arbre de liaison 25 comprend un passage axial 25d, dans lequel le moyen de déclenchement 100 commun aux moyens de retenue 99a et 99b, comprend un doigt de déclenchement 105 guidé axialement dans le passage axial 25d, et deux nervures annulaires 105a et 105b, en saillie. La nervure 105a, 105b est en regard de la rangée de billes 103, 104 et maintien ladite rangée de billes 103, 104, en position de sortie radialement écartées faisant saillie radialement et venant en interférence radiale avec les pièces mobiles 101, 102.

Le doigt de déclenchement 105 comprend un relais et un électroaimant (non représenté), aptes à commander son déplacement axial. Une pièce élastique 106, 107, est disposée à l'intérieur du carter 30, par exemple une rondelle Belleville, contre le couvercle 41, 46,

Le fonctionnement du dispositif de maintien de sûreté 26 est le suivant. Le bras de déplacement 23 de l'actionneur, permettant la rotation des roues arrières du véhicule automobile, entraîne en translation dans un même sens de translation, l'arbre de liaison 25, le doigt de déclenchement 105, les pièces mobiles 101 et 102. En cas de défaillance de l'actionneur, le relais se déclenche et déplace le doigt de déclenchement 105. Les rangées de billes 103 et 104, qui étaient préalablement maintenues dans les passages radiaux 25b et 25c de l'arbre de liaison 25 par les nervures 105a et 105b du doigt de déclenchement 105, se rétractent radialement vers l'intérieur et libèrent les pièces mobiles 101 et 102, qui se déplacent axialement jusqu'à venir en appui sur les couvercles par l'intermédiaire des pièces élastiques 106 et 107, dimensionnées de façon à encaisser les efforts. Le dispositif de maintien de sûreté 26 se retrouve alors dans la même configuration que le mode de réalisation précédent permettant le rappel des roues dans une position de braquage des roues quasi nulle.

Quel que soit le mode de réalisation de l'invention, l'essieu comprenant le dispositif de maintien de sûreté est particulièrement simple et économique.

L'essieu permet de ramener les roues du véhicule automobile dans une position déterminée ou de les bloquer instantanément afin qu'en cas de panne de l'actionneur, les efforts latéraux subit par les roues dans les virages n'entraînent pas de translations du bras de déplacement de l'actionneur et donc de rotations intempestives des roues engendrant une instabilité du véhicule automobile.

## Revendications

1. Essieu (1) pour véhicule automobile à au moins quatre roues directrices comprenant au moins deux bras oscillants (2) portant des supports de roues (4) aptes à pivoter selon un axe sensiblement vertical par rapport auxdits bras oscillants (2) pour orienter les roues, l'essieu comprenant une tringlerie de commande d'orientation des roues (15, 19) reliée auxdits supports de roues et commandée par au moins un actionneur (24) comprenant un bras de déplacement (23) qui est mobile suivant son axe et sur lequel est monté un dispositif de maintien de sûreté (26), indépendant de l'actionneur (24) et apte à maintenir le bras de déplacement (23) dans une position donnée, en cas de défaillance de l'actionneur (24), **caractérisé en ce que** le dispositif de maintien de sûreté (26) comprend des moyens de blocage (31) du bras de déplacement (23) aptes à bloquer instantanément le bras de déplacement quelque soit la position dudit bras de déplacement.

2. Essieu (1) selon la revendication 1, **caractérisé en ce que** les moyens de blocage (31) comprennent un carter (30) fixe entourant le bras de déplacement (23) comprenant un alésage (40) muni d'une section tronconique (40d), au moins un ensemble de serrage (51) disposés sur le bras de déplacement (23) et comprenant des mors (60, 61, 62) sollicités axialement contre la surface de section tronconique (40d) par un organe élastique (67) pour provoquer leur rapprochement radial, et le serrage du bras de déplacement (23), les moyens de blocage (31) comprenant des doigts de déclenchement (76) mobiles entre une position de retenue axiale du mors et une position déverrouillée.

3. Essieu (1) selon la revendication 2, **caractérisé en ce que** les doigts de déclenchement (76, 103) sont actionnés par un relais et un électroaimant.

## Claims

1. Axle (1) for a motor vehicle with at least four wheel steering, comprising at least two trailing arms (2) bearing wheel supports (4) capable of pivoting about a substantially vertical axis with respect to the said trailing arms (2) so as to orient the wheels, the axle comprising a wheel-orientation control linkage (15, 19) connected to the said wheel supports and controlled by at least one actuator (24) comprising an actuating arm (23) which is able to move about its axis and on which a safety retaining device (26) is mounted, this retainer device being independent of the actuator (24) and able to keep the actuating arm (23) in a given position should the actuator (24) fail, **characterized in that** the safety retainer device (26) comprises means (31) for immobilizing the actuating arm (23) which means are capable of immediately immobilizing the actuating arm whatever the position of the said actuating arm.

2. Axle (1) according to Claim 1, **characterized in that** the immobilizing means (31) comprise a fixed casing (30) surrounding the actuating arm (23) and comprising a bore (40) with a frustoconical section (40d), at least one clamping assembly (51) positioned on the actuating arm (23) and comprising jaws (60, 61, 62) urged axially against the surface of the frustoconical section (40d) by an elastic member (67) to cause them to move radially closer together and clamp the actuating arm (23), the immobilizing means (31) comprising triggering fingers (76) that are capable of moving between a position of axial retention of the jaw and an unlocked position.

3. Axle (1) according to Claim 2, **characterized in that** the triggering fingers (76, 103) are operated by a relay and an electromagnet.

## Patentansprüche

1. Achse (1) für ein Kraftfahrzeug mit mindestens vier gelenkten Rädern, die mindestens zwei Schwingarme (2) aufweist, die Radhalter (4) tragen, welche gemäß einer im Wesentlichen senkrechten Achse bezüglich der Schwingarme (2) schwenken können, um die Räder auszurichten, wobei die Achse ein Steuergestänge (15, 19) zur Ausrichtung der Räder aufweist, das mit den Radhaltern verbunden ist und von mindestens einem Stellglied (24) gesteuert wird, welches einen Verschiebearm (23) aufweist, der gemäß seiner Achse beweglich ist und auf den eine Sicherheitshaltevorrichtung (26) montiert ist, die vom Stellglied (24) unabhängig und fähig ist, den Verschiebearm (23) bei einem Ausfall des Stellglieds (24) in einer gegebenen Stellung zu halten, **dadurch gekennzeichnet, dass** die Sicherheitshaltevorrichtung (26) Blockiermittel (31) des Verschiebearms (23) aufweist, die den Verschiebearm unabhängig von der Stellung des Verschiebearms augenblicklich blockieren können.

2. Achse (1) nach Anspruch 1, **dadurch gekennzeichnet, dass** die Blockiermittel (31) ein den Verschiebearm (23) umgebendes, ortsfestes Gehäuse (30), das eine Bohrung (40) mit einem kegelstumpfförmigen Querschnitt (40d) aufweist, und mindestens eine Klemmeinheit (51) aufweisen, die auf dem Verschiebearm (23) angeordnet ist und Backen (60, 61, 62) aufweist, die durch ein elastisches Organ (67) axial gegen die Fläche mit kegelstumpfförmigem Querschnitt (40d) beaufschlagt werden, um ihre radiale Annäherung und das Festklemmen des Verschiebearms (23) zu bewirken, wobei die Blockiermittel (31) Auslösefinger (76) aufweisen, die zwischen einer axialen Rückhaltestellung der Backe und einer Entriegelungsstellung beweglich sind.

3. Achse (1) nach Anspruch 2, **dadurch gekennzeichnet, dass** die Auslösefinger (76, 103) von einem Relais und einem Elektromagneten betätigt werden.
